# EUROPÄISCHE PATENTSCHRIFT

(11) **EP 1 577 154 B1**
(45) Veröffentlichungstag und Bekanntmachung des Hinweises auf die Patenterteilung: **17.01.2007**
(21) Anmeldenummer: 05006119.1
(22) Anmeldetag: 21.03.2005
(51) Int. Cl.: B60N 2/48

(54) **Fahrzeugsitz mit einer schwenkbar gelagerten kopfstütze**
Vehicle seat with pivotal headrest
Siège de véhicule avec appui-tête pivotant

(30) Priorität: 19.03.2004 DE 102004014133
(43) Veröffentlichungstag der Anmeldung: 21.09.2005
(73) Patentinhaber: Alfmeier Präzision AG Baugruppen und Systemlösungen, 91757 Treuchtlingen (DE)
(72) Erfinder: Kraft, Dieter, 91799 Langenaltheim (DE); Hofmockel, Jürgen, 91522 Ansbach (DE)
(74) Vertreter: Mörtel & Höfner

(56) Entgegenhaltungen:
- EP-A- 0 976 608
- DE-A1- 3 545 142

## Beschreibung

Die Erfindung betrifft einen Fahrzeugsitz insbesondere für Kraftfahrzeuge mit einer an einer Sitzlehne insbesondere eines Rücksitzes angebrachten, im Wesentlichen von einem Prallkörper gebildeten Kopfstütze, welche um eine in Fahrzeugquerrichtung verlaufende Schwenkachse zwischen einer Gebrauchs- und einer die Sicht über die Sitzlehne hinweg nicht einschränkenden Nichtgebrauchstellung schwenkbar gelagert ist. Damit die Kopfstütze in der Nichtgebrauchsstellung wackel- und klapperfrei gehalten wird, ist eine Feder vorgesehen, welche die Kopfstütze in die Nichtgebrauchsstellung vorspannt. Um eine sichere Lagefixierung auch bei extremen Fahrbedingungen, etwa bei Fahrten über holprigen Untergrund zu gewährleisten, ist eine entsprechend große Federkraft erforderlich. Wird die Kopfstütze aus der Nichtgebrauchsstellung in die Gebrauchsstellung geschwenkt so erfolgt dies gegen die Wirkung der Feder. Dementsprechend ist in der Gebrauchsstellung eine Verriegelung der Kopfstütze erforderlich. Diese erfolgt üblicherweise durch einen Drehmomentschluss zwischen der in bezug auf die Sitzlehne drehfixierten Schwenkachse und der Kopfstütze bzw. dem diese im wesentlichen bildenden Prallkörper. Aufgrund der in Richtung der Nichtgebrauchsstellung wirkenden Federkraft wirkt in den miteinander im Sinne eines Drehmomentschlusses zusammenwirkenden Teilen eine hohe Reibung, so dass zur Entriegelung der Kopfstütze bzw. zur Aufhebung des Drehmomentschlusses hohe Betätigungskräfte erforderlich sind. Hinzu kommt, dass der Drehmomentschluss derart fest sein muss, dass er sich im Crashfall nicht von alleine löst und die Kopfstütze im Moment des Aufpralls in ihre Nichtgebrauchsstellung klappt.

In DE 35 45 142 A ist ein Fahrzeugsitz mit Kopfstütze offenbart, die über ein Hebelgetriebe mit der Sitzlehne klappbar verbunden ist.

Davon ausgehend ist es die Aufgabe der Erfindung, einen Fahrzeugsitz mit klappbarer Kopfstütze vorzuschlagen, welche in ihrer Gebrauchsstellung auch in Extremsituationen sicher gehalten wird und dennoch leicht entriegelbar ist, um sie in ihre Nichtgebrauchsstellung schwenken zu können.

Diese Aufgabe wird durch einen Fahrzeugsitz mit einer gemäß Anspruch 1 ausgestalteten Kopfstütze gelöst. In deren Prallkörper ist ein Kniehebel angeordnet, der von zwei über ein Kniegelenk miteinander verbundenen, in einer quer zur Schwenkachse der Kopfstütze verlaufenden Ebene schwenkbaren Hebelarmen gebildet ist. Das radial von der Schwenkachse entferntes erste Ende des Kniehebels ist ortsfest an einer mit dem Prallkörper verbundenen Achse drehbar gelagert ist. Zur Verriegelung der Gebrauchsstellung der Kopfstütze hält der Kniehebel einen Drehmomentschluss zwischen Prallkörper und Schwenkachse aufrecht, wobei die Lage der Hebelarme zueinander von einer im Prallkörper angeordneten Fixiereinrichtung fixiert ist. Ein Kniehebel in einer gestreckten oder nahezu gestreckten Lage kann in Richtung der Verbindungslinie zwischen seinen beiden Enden einwirkenden Kräften einen hohen Widerstand entgegensetzen, so dass er auch hohen im Crashfall auftretenden Trägheitskräften standhält. Voraussetzung ist dabei, dass der Kniehebel nicht abknicken kann, dass also die Hebelarme unter Belastung ihre gegenseitige Ausrichtung beibehalten, was erfindungsgemäß durch die Fixiereinrichtung gewährleistet ist. Die bei Belastung quer zu der o.g. Verbindungslinie auf das Kniegelenk wirkende Kraft ist um ein Vielfaches geringer als die in Richtung der Verbindungslinie wirkende Kraft der genannten Feder. Eine Gegenhaltung zur Lagefixierung oder eine Bewegung der Hebelarme zum Zwecke der Entriegelung ist daher im Kniebereich mit geringem Kraftaufwand möglich.

Die Fixierung der Gebrauchsstellung kann prinzipiell durch einen gestreckten Kniehebel erfolgen. Vorzugsweise werden aber zur Verriegelung der Gebrauchsstellung Kniehebel eingesetzt, die über- oder unterstreckt sind. Bei der ersten Alternative schließen die Hebelarme auf ihrer von ihrem Schwenkbereich weg weisenden Seite einen Winkel > 180° ein. Um diese Lage zu fixieren ist ein Gegenlager vorgesehen, das auf der genannten Seite angeordnet ist und das mit einem Hebelarm im Bereich des Kniegelenks zusammenwirkt. Bei einer Belastung des Kniehebels etwa durch die o.g. Feder wird dieser mit einem Hebelarm an das Gegenlager gedrückt und dadurch lagefixiert. Zweckmäßigerweise ist das Gegenlager im Bereich des Kniegelenks positioniert, weil dort, wie bereits ausgeführt, die bei Belastung des Kniehebels auftretenden Querkräfte am geringsten sind. Zum Entriegeln muss der Kniehebel aus seiner überstreckten Lage über seine gestreckte Lage, die seinen Totpunkt bildet, hinaus in eine Lage geschwenkt werden, in der seine Hebelarme auf der seinem Schwenkbereich abgewandten Seite einen Winkel < 180° einschließen. Aufgrund der auf seine Enden wirkenden Federkraft klappt der Kniehebel zusammen, wobei die Feder die Kopfstütze in ihre Nichtgebrauchsstellung bewegt. Zum Zwecke der Entriegelung der Gebrauchsstellung ist ein Auslöseelement vorhanden, mit die Winkelstellung der Hebelarme auf einen Winkel < 180° veränderbar ist. Bei diesem Winkel klappt der Kniehebel unter Aufhebung der Drehblockade zwischen Prallkörper und Schwenkachse zusammen. Vorzugsweise ist das Fixierelement ein auf der dem Schwenkbereich abgewandten Seite des Kniehebels angeordnetes Gegenlager, welches gleichzeitig als Auslöseelement dient. Bei einer besonders bevorzugten Ausgestaltung ist dieses Gegenlager eine in Fahrzeugquerrichtung im Prallkörper beweglich geführte, eine Schrägfläche aufweisenden Stange. Mit ihrer Schrägfläche wirkt sie mit einer an einem Hebelarm angeordneten komplementär gestalteten Schrägfläche nach Art eines Keilgetriebes zusammen. Auch hier ist es wegen des geringen Kraftaufwands vorteilhaft, wenn die Beaufschlagung des Kniehebels im Bereich des Kniegelenks erfolgt.

Bei einer bevorzugten Ausgestaltung ist das zweite Ende des Kniehebels mit einem Klinkenhebel gelenkig verbunden, welcher um eine in Fahrzeugquerrichtung verlaufende, ortsfest mit dem Prallkörper verbundenen Achse zwischen einer Sperr- und einer Freigabestellung schwenkbar gelagert ist, wobei in der Sperrstellung ein Drehmomentschluss zwischen Klinkenhebel und Schwenkachse vorhanden und dieser in der Freigabestellung aufgehoben ist. Der Kniehebel ist, wie bei dem ersten Ausführungsbeispiel auch, zur Fixierung der Gebrauchsstellung der Kopfstütze überstreckt. Der genannte Drehmomentschluss wird vorzugsweise dadurch erreicht, dass in der der Schwenkachse zugewandten Seite des Klinkenhebels eine Ausnehmung vorhanden ist, in die in der Sperrstellung eine von der Umfangsfläche der Schwenkachse vorstehende Rastnase eingreift. Der Kniehebel wirkt hier also nur mittelbar einer Relativdrehung von Prallkörper und Schwenkachse entgegen.

Bei einer weiteren bevorzugten Ausgestaltung wirkt das zweite Ende des Kniehebels unmittelbar auf die Schwenkachse ein, indem es sich an einem von der Schwenkachse (5) abstehenden und mit dieser drehfest verbundenen Ausleger (55) abstützt.

Während bei den bisher beschriebenen Varianten der Prallkörper durch einen überstreckten Kniehebel in seiner Gebrauchsstellung gehalten wird, ist bei einer weiteren bevorzugten Ausgestaltung durch einen unterstreckten Kniehebel bewerkstelligt. Dessen Hebelarme schließen auf ihrer von ihrem Schwenkbereich weg weisenden Seite einen Winkel < 180° ein. Auch hier wird die gegenseitige Ausrichtung der Hebelarme durch ein Fixierelement fixiert, das auf einer beliebigen Seite des Kniehebels angeordnet sein kann. Je nach dem auf welcher Seite des Kniehebels es sich befindet, wird es auf Druck oder Zug belastet. Ein Auslöseelement, das den Kniehebel über seinen Totpunkt hinaus bringt ist hier jedoch nicht erforderlich. Um ein Zusammenklappen des Kniehebels und damit eine Entriegelung der Kopfstütze zu ermöglichen muss lediglich die Lagefixierung der Hebelarme durch das Fixierelement aufgehoben werden. Das Fixierelement ist vorzugsweise ein im Schwenkbereich der Hebelarme angeordnetes Gegenlager, das mit einem Hebelarm im Beeich des Kniegelenks zusammenwirkt, wobei es zur Entriegelung der Gebrauchsstellung der Kopfstütze aus der Bewegungsbahn des Hebelarms entfernt wird. Bei einer besonders bevorzugten Ausgestaltung ist das Gegenlager eine im Schwenkbereich des Kniehebels angeordnete, mit ihrem einen Ende an einer Achse zwischen einer Sperr- und einer Freigabestellung schwenkbar gelagerte Klinke, die in der Sperrstellung mit einem an ihrem Freiende angeordneten Haken in einen an einem Hebelarm im Bereich des Kniegelenks vorhandenen Haken eingreift und die sich in der Freigabestellung in einer Schwenkstellung befindet, in der sie den Haken des Hebelarms freigibt und außerhalb von dessen Bewegungsbahn angeordnet ist. Denkbar ist auch, dass eine solche Klinke auch auf der dem Schwenkbereich abgewandten Seite des Kniehebels angeordnet wird.

Um sicherzustellen, dass der Kniehebel auch in Extremsituationen seine einen Drehmomentschluss zwischen Prallkörper und Schwenkachse aufrecht erhaltende Lage beibehält, ist er in Richtung dieser Lage mit Hilfe einer Feder vorgespannt.

Wenn die Fixierung einer Kopfstütze an einer Sitzlehne nicht vertikal verlaufenden Tragstangen sondern mit Hilfe der Schwenkachse in einer den unteren Bereich der Kopfstütze aufnehmenden Ausnehmung erfolgen soll, kann die Montage vereinfacht werden, wenn die Schwenkachse zwei, jeweils seitlich aus dem Prallkörper mit einem Überstand herausstehende, zueinander axial bewegliche Teile umfasst, wobei ein Teil gegen die Wirkung einer Feder soweit relativ zum Prallkörper verschiebbar ist, dass sein Überstand zumindest verringert ist. In diesem Zustand kann die Kopfstütze in die Lehenausnehmung eingesetzt werden, wobei danach die Schwenkachse wieder expandiert und das entsprechende Ende der Achse in ein Lager eingreift. Vorteilhafterweise ist die Feder eine Schraubenfeder welche das andere Teil axial fixiert umgreift. Besonders vorteilhaft im Hinblick auf den Montageaufwand die erforderliche Teilezahl ist es dabei, wenn die Schraubenfeder neben ihrer axialen Rückstellfunktion auch dazu dient, die Kopfstütze in ihrer Nichtgebrauchsstellung zu halten.

Die Erfindung wird nun unter Bezugnahme auf die beigefügten Zeichnungen näher erläutert. Es zeigen:
- Fig. 1: die Lehne einer Rücksitzbank mit Kopfstützen, die an einer in der Sitzlehne angeordnete quer zur Fahrzeugrichtung verlaufenden Achse klappbar gelagert sind,
- Fig. 2: ein erstes Ausführungsbeispiel einer Kopfstütze in perspektivischer Darstellung, bei dem die Fixierung in der Gebrauchsstellung durch einen überstreckten Kniehebel erfolgt,
- Fig. 3: den Klappmechanismus von Fig. 2 in perspektivischer Darstellung,
- Fig. 4: eine schematisierte Schnittdarstellung, welche eine Kopfstütze in ihrer Gebrauchsstellung zeigt,
- Fig. 5: die Kopfstütze von Fig. 4 in abgeklappter Nichtgebrauchsstellung,
- Fig. 6: eine schematisierte, zum Teil aufgebrochene Seitenansicht eines zweiten Ausführungsbeispiels einer Kopfstütze in der Gebrauchsstellung,
- Fig. 7: die Kopfstütze von Fig. 6 in ihrer Nichtgebrauchsstellung,
- Fig. 8: ein drittes Ausführungsbeispiel einer Kopfstütze in der Gebrauchsstellung,
- Fig. 9: die Kopfstütze von Fig. 8 in der abgeklappten Nichtgebrauchsstellung.

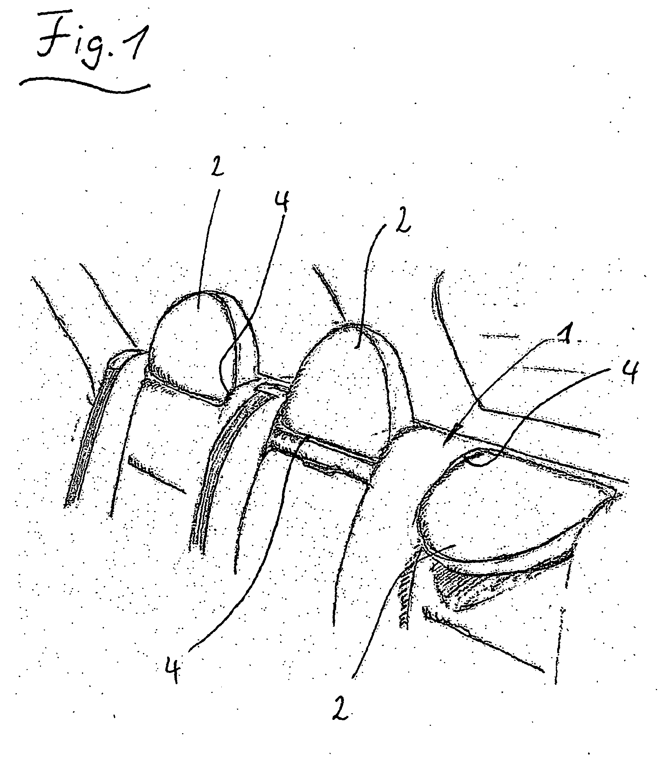

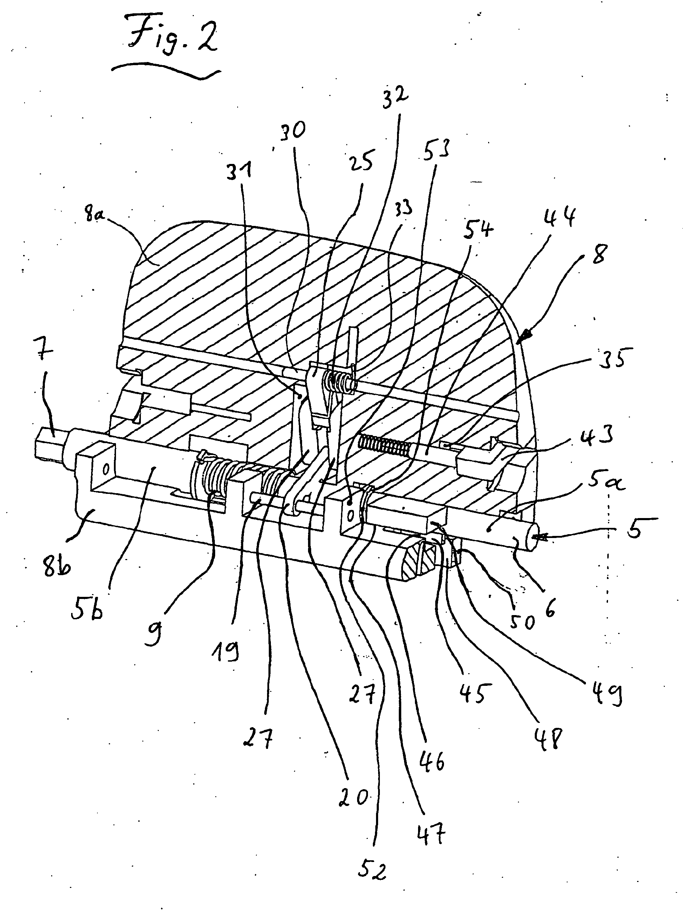

Fig. 1 zeigt den Lehnenbereich einer Rücksitzbank eines Kraftfahrzeuges. In der Sitzlehne 1 sind insgesamt drei Kopfstützen 2 vorhanden. Diese sind um eine in Fahrzeugquerrichtung 3 verlaufende Achse 5 (siehe z.B. Fig. 2) schwenkbar gelagert. Der untere Bereich einer Kopfstütze 2 ist von einer Vertiefung 4 in der Lehnenoberseite aufgenommen. Der in Fig. 2 bis 5 detailliert dargestellte Klappmechanismus für eine Kopfstütze 2 umfasst zunächst die bereits erwähnte Schwenkachse 5. Diese ist mit ihren seitlich über die Kopfstütze 2 hinaus stehenden Enden von einer im Bereich einer Vertiefung 4 angeordneten Tragkonstruktion (nicht dargestellt) gehalten. Die Schwenkachse 5 durchsetzt einen die Kopfstütze 2 im Wesentlichen bildenden Prallkörper 8, der sich aus zwei aneinander beispielsweise durch eine Verklebung fixierten Hälften nämlich einem hinteren Teilkörper 8a und einem vorderen Teilkörper 8b zusammensetzt.

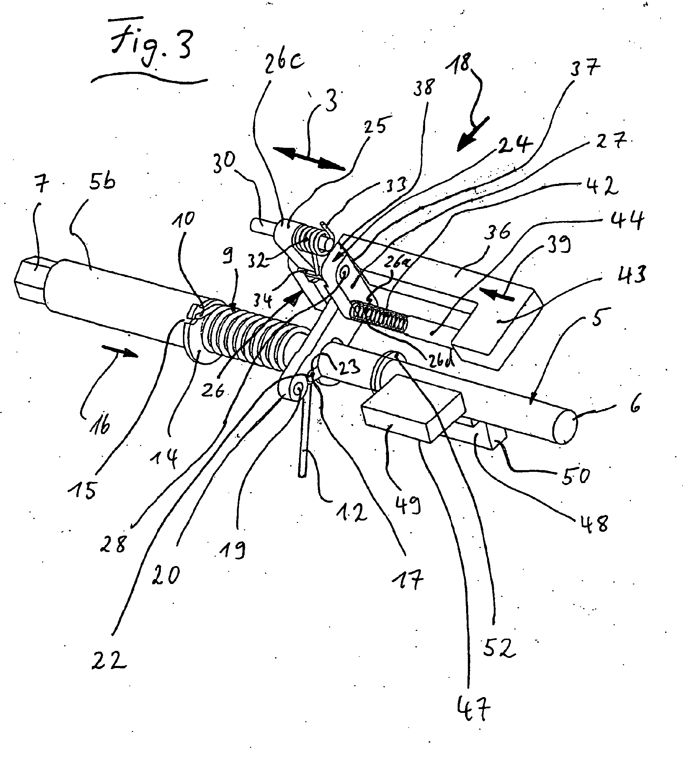

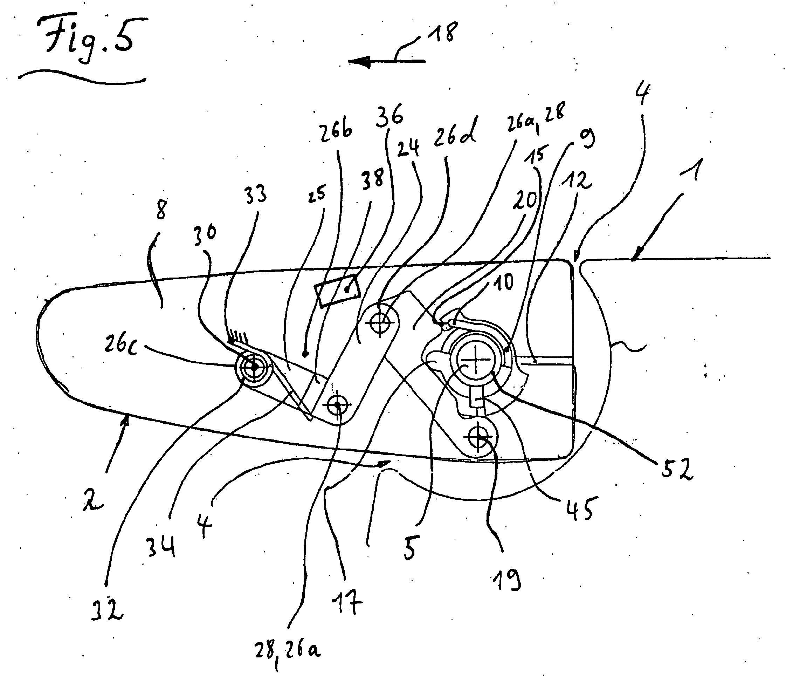

Die Kopfstütze 2 wird durch Federkraft in ihrer Nichtgebrauchsstellung (Fig. 1 rechte Kopfstütze, Fig. 5) gehalten. Die Federkraft wird von einer Schraubenfeder 9 aufgebracht, welche die Schwenkachse 5 an einem mittleren Längsabschnitt umfasst. Das eine Federende 10 der Schraubenfeder 9 ist drehfest an der Schwenkachse 5 fixiert, wobei diese wiederum drehfixiert in der Sitzlehne 1 gelagert ist. Das zweite Federende 12 der Schraubenfeder 9 erstreckt sich von der Schwenkachse 5 weg und ist in den Prallkörper 8 eingebettet bzw. erstreckt sich in einer in diesem vorhandenen Ausnehmung (nicht dargestellt) hinein. Die Schraubenfeder 9 ist so vorgespannt, dass ihr Federende 12 in der Nichtgebrauchsstellung (Fig. 5) den sich gegen die Fahrtrichtung 18 von der Schwenkachse 5 weg erstreckenden Abschnitt des Prallkörpers 8 mit einer im wesentlichen nach oben gerichteten Kraft beaufschlagt. Die Schraubenfeder 9 ist dabei so ausgelegt, dass ein Wackeln der Kopfstütze in der Nichtgebrauchsstellung während des Fahrzeugbetriebes verhindert ist. Die oben erwähnte drehfixierte Lagerung der Schwenkachse 5 in der Sitzlehne 1 wird durch eine polygone Ausgestaltung von deren einem Ende 7 gewährleistet. Um ein Einsetzen der Kopfstütze 2 in eine Vertiefung 4 der Sitzlehne zu ermöglichen bzw. zu erleichtern, ist die Schwenkachse 5 aus zwei axial zueinander beweglichen Teilen, nämlich einem Stab 5a und einer Hülse gebildet. Die Hülse 5b ist auf dem in Fig. 3 nach links weisende Endabschnitt des Stabs 5a drehfixiert aufgesteckt. Das äußere Ende der Hülse 5b bildet das Ende 7 der Schwenkachse 5, ihr inneres Ende trägt ein sich über einen Teilbereich des Hülsenumfangs erstreckendes Flanschsegment 14. Dieses weist einen nutartigen Einschnitt 15 auf, in den das Federende 10 eingreift. Zum Einsetzen einer Kopfstütze 2 in eine Vertiefung 4 einer Sitzlehne 1 wird die Schwenkachse 5 verkürzt, indem die Hülse 5a in Richtung des Pfeils 16 unter Kompression der Schraubenfeder 9 in den Prallkörper 8 hinein geschoben wird. Das aus der Kopfstütze vorstehende Ende 6 wird in ein in der Vertiefung 4 vorhandenes Lagerauge (nicht dargestellt) eingesetzt und die Kopfstütze 2 in ihre Sollposition gebracht. In der Sollposition der Kopfstütze 2 drückt die Schraubenfeder 9 die Hülse 5a wieder nach außen, wobei das polygon ausgebildete Ende 7 in ein komplementär gestaltetes Lagerauge (nicht dargestellt) in der Sitzlehne eingreift. Die Schraubenfeder (9) erfüllt somit zwei Funktionen, indem sie zum einen die axiale Rückstellung und zum anderen die Fixierung der Kopfstütze (2) in ihrer Nichtgebrauchsstellung gewährleisten.

Zur Fixierung der Kopfstütze 2 in ihrer Gebrauchsstellung ist ist folgende Ausgestaltung vorgesehen: Auf der Seite des Federendes 12 ist an der in Fahrtrichtung 18 weisenden Seite der Schwenkachse 5 eine etwa radial abstehende Rastnase 17 fixiert, beispielsweise angeformt. Mit Radialabstand zur Rastnase 17 ist im Teilkörper 8b eine sich in Fahrzeugquerrichtung 3 erstreckende Achse 19 ortsfest fixiert. An der Achse 19 ist ein Klinkenhebel 20 mit seinem einen Ende schwenkbar gelagert. Der Klinkenhebel 20 erstreckt sich gegen die Fahrtrichtung 18 über die Schwenkachse 5 hinweg. An der der Schwenkachse 5 zugewandten Unterseite des Klinkenhebels 20 ist eine Ausnehmung 22 vorhanden, in welche die Rastnase 17 hinein ragt. Die Rastnase 17 liegt dabei an einer als Anschlag dienenden Seitenkante 23 der Ausnehmung 22 an. In dieser Stellung wird der Klinkenhebel 20 von einem sich in der überstreckten Lage befindlichen, aus zwei Hebelarmen 24, 25 gebildeten Kniehebel 26 gehalten. In dieser Lage schließen die Hebelarme auf der ihrem Schwenkbereich 26b abgewandten Seite 26e einen Winkel α ein, der geringfügig größer ist als 180°. Der Hebelarm 24 ist von zwei in Fahrzeugquerrichtung 3 beabstandeten Schenkeln 27 gebildet. Die Hebelarme 24, 25 sind über eine in Fahrzeugquerrichtung 3 verlaufende Achse 28 miteinander verbunden, wobei das von der Achse 28 durchgriffene Ende des Hebelarmes 25 von den Schenkeln 27 des Hebelarmes 24 flankiert ist. Die der Achse 28 abgewandten Enden der Schenkel 27 schließen das der Achse 19 abgewandte Ende des Klinkenhebels 20 zwischen sich ein und sind mit diesem über eine Achse 29 schwenkbar verbunden. Die Achsen 28 und 29 sind nicht ortsfest im Prallkörper 8 fixiert, sie sind vielmehr in einem Hohlraum 31 (Fig. 2) des Prallkörpers 8 angeordnet und können sich ebenso wie der Klinkenhebel 20 und die Hebelarme 24, 25 bei einer Klappbewegung der Kopfstütze 2 relativ zum Prallkörper 8 bewegen. Das äußere Ende des Hebelarmes 25 ist an einer Achse 30 schwenkbar gelagert, welche ortsfest im Prallkörper 8 fixiert ist. Die selbsthemmende Strecklage des Kniehebels 26 ist durch eine zwei Schenkel 33, 34 aufweisende Schenkelfeder 32 gesichert, welche die Achse 30 umfasst. Der eine Schenkel 33 ist ortsfest im Prallkörper 8 fixiert, während der andere Schenkel 34 den Hebelarm 25 von der Seite des Schwenkbereichs 26b her beaufschlagt.

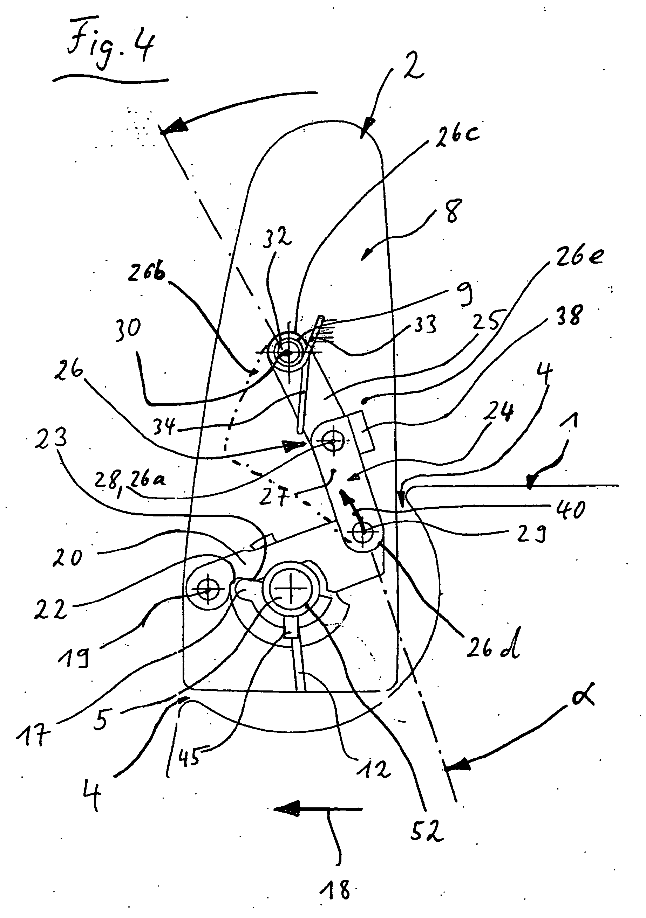

Damit die Kopfstütze 2 aus ihrer Gebrauchsstellung in ihre Nichtgebrauchsstellung gemäß Fig. 5 schwenkbar ist, muss zunächst der Totpunkt des Kniehebels 26 überwunden werden. Dazu dient eine in einer Ausnehmung 35 des Teilkörpers 8a in Fahrzeugquerrichtung 3 beweglich geführte Stange 36 (in Fig. 4 weggelassen). Die Stange 36 dient auch als Gegenlager, an dem der Kniehebel 26 im bereich des Kniegelenks 26a anliegt, wodurch seine überstreckte Lage fixiert wird. Das innere Ende der Stange 36 weist eine Schrägfläche 37 auf, welche mit einer komplementär gestalteten Schrägfläche 38 an der gegen die Fahrtrichtung 18 weisende Seite eines Schenkels 27, beispielsweise des in Fig. 3 rechten Schenkels 27 nach Art eines Keilgetriebes derart zusammen wirkt, dass bei Betätigung der Stange 36 in Richtung des Pfeils 39 die überstreckte Lage des Kniehebels 26 aufgehoben wird. Sobald die Hebelarme 24, 25 auf der dem Schwenkbereich 26b abgewandten Seite 26e des Kniehebels 26 einen Winkel α < 180°C einschließen, wird die Kopfstütze 2 bzw. deren Prallkörper 8 durch die Schraubenfeder 9 in die Nichtgebrauchsstellung gemäß Fig. 5 geschwenkt, wobei der Kniehebel zusammenklappt. Die Achsen 19 und 30 führen dabei eine Kreisbewegung um die Schwenkachse 5 aus, während die Bewegungsbahnen der Achsen 28, 29 aufgrund einer Überlagerung mit einer translatorischen Bewegungskomponente eine nichtkreisförmige Bewegungsbahn beschreiben. In dem Maße, in dem sich der von den Hebelarmen 24, 25 aufgespannte Winkel α verkleinert, nähert sich die Achse 29 der Achse 30, wodurch der Klinkenhebel 20 um die Achse 19 eine Schwenkbewegung in Richtung des Pfeils 40 ausführt. Die Folge ist, dass die Rastnase 17 nicht mehr an der Seitenkante 23 der Ausnehmung 23 anliegt, so dass ein Verschwenken des Prallkörpers 8 um die Schwenkachse 5 in die Nichtgebrauchsstellung (Fig. 5) möglich ist. Der Rückhub der Stange 36 wird durch eine Schraubenfeder 42 bewirkt, die sich einerseits am Teilkörper 8a und andererseits an einem verbreiterten, als Betätigungsknopf 43 dienenden Ende der Stange 36 abstützt. Zwischen dem Betätigungsknopf 43 und der Schraubenfeder 42 ist ein Stab 44 angeordnet.

Zur Begrenzung der Schwenkbewegung des Prallkörpers 8 ist an der Unterseite des Stabs 5a ein etwa stegförmiger Anschlag 45 angeformt, der radial und etwa vertikal aus der Umfangsfläche der Schwenkachse 5 vorsteht. Der Anschlag 45 ragt in einen Hohlraum 46 des Prallkörpers 8 hinein. Der Hohlraum 46 ist in Schwenkrichtung des Prallkörpers 8 von Anschlagflächen 47, 48 begrenzt, wobei diese Flächen die Oberflächen von im Prallkörper 8 eingebetteten Elastomerkörpern 49, 50 sind. Die Elastomerkörper 49, 50 bewirken einerseits eine Endlagendämpfung und gewähren andererseits einen gewissen Toleranzausgleich.

Der Prallkörper 8 ist axial an der Schwenkachse 5 fixiert. Zu diesem Zweck trägt diese an einer zwischen dem Elastomerkörper 49 und dem Klinkenhebel 20 liegenden Stelle einen Flansch 52. Die Axialbewegung des Flansches 52 bzw. der Schwenkachse 5 ist durch im Teilkörper 8a bzw. im Teilkörper 8b vorhandene Anschlagflächen 53, 54 begrenzt.

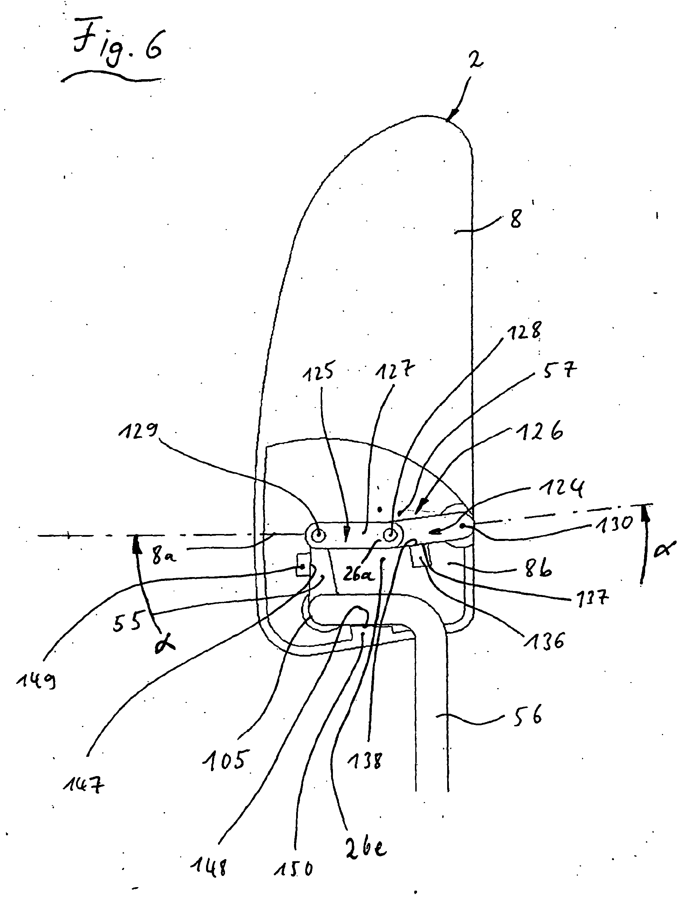

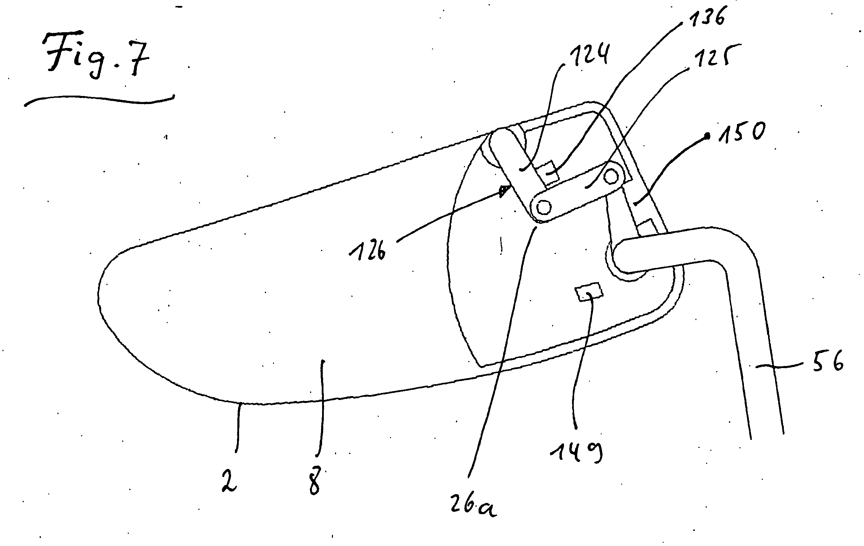

In Fig. 6, 7 ist ein Ausführungsbeispiel gezeigt, bei dem die Fixierung der Kopfstütze 2 in ihrer Gebrauchsstellung zwar ebenfalls durch einen überstreckten Kniehebel 126 bewerkstelligt wird, wobei sich dieser aber mit seinem zweiten Ende 26d an einem drehfixiert mit der Schwenkachse 105 verbundenen Ausleger 55 abstützt. Die Kopfstütze 2 ist an zwei in Fahrzeugquerrichtung 3 beabstandeten Tragstangen 56 fixiert, welche in der Sitzlehne, gegebenenfalls axial verschiebbar, gehalten sind. Die Schwenkachse 105 verbindet die beiden Tragstangen 56, ist beispielsweise einstückig mit diesen verbunden. Eine solche Ausgestaltung ist auch bei dem weiter oben beschriebenen Ausführungsbeispiel (Fig. 2-5) denkbar. Der Prallkörper 8 ist durch eine Schraubenfeder (nicht dargestellt) mit einer der Schraubenfeder 9 des oben beschriebenen Ausführungsbeispiels entsprechenden Ausgestaltung in seine Nichtgebrauchsstellung vorgespannt.

Der Kniehebel 126 setzt sich aus zwei Hebelarmen 124, 125 zusammen, wobei der Hebelarm 125 von zwei in Fahrzeugquerrichtung 32 beabstandeten Schenkeln 127 gebildet ist. Die das Kniegelenk 26a bildenden inneren Enden der Hebelarm 124, 125 sind über eine Achse 128 miteinander verbunden, wobei die Schenkel 127 das innere Ende des Hebelarmes 124 zwischen sich einschließen. Das der Achse 128 abgewandte Ende des Hebelarmes 124 ist an einer ortsfest im Prallkörper 8 fixierten Achse 130 schwenkbar gelagert. Die äußeren Enden des Hebelarmes 125 flankieren das Freiende des Auslegers 55 und sind mit diesem über eine Achse 129 gelenkig verbunden. Die Achsen 128, 129 und 130 verlaufen in Fahrzeugquerrichtung. Der Kniehebel 126 ist über eine Feder (nicht dargestellt), ähnlich wie bei dem weiter oben beschriebenen Ausführungsbeispiel, in seine überstreckte Lage vorgespannt. Zur Überwindung des Totpunkts des Kniehebels 126 ist ebenfalls eine Stange 136 vorgesehen, welche mit einer Schrägfläche 137 mit einer komplementär gestalten Schrägfläche 138 am Hebelarm 124 im Sinne eines Keilgetriebes zusammen wirkt, wobei die Schrägfläche 138 nahe dem Kniegelenk 26a angeordnet ist. Die Endlagendämpfung für die Schwenkbewegung der Kopfstütze 2 wird durch Elastomerkörper 149, 150 bewirkt, welche jeweils mit einer Anschlagfläche 147 bzw. 148 mit dem Ausleger 55 zusammenwirken. Die überstreckte Lage des Kniehebels 126 kann zusätzlich durch eine mechanische Sperre (nicht dargestellt) gesichert werden, welche beispielsweise im Bereich der Achse 128 etwa an der Stelle 57 im Schwenkbereich 26b angeordnet ist. Die mechanische Sperre ist zweckmäßigerweise mit der Stange 136 so bewegungsgekoppelt, dass bei der Überwindung der überstreckten Lage gemäß Fig. 6 die mechanische Sperre aus dem Schwenkbereich 26b der Hebelarme 124, 125 entfernt wird. Eine ähnliche zusätzliche Sicherung ist auch bei dem weiter oben beschriebenen Ausführungsbeispiel denkbar. Die Teile des Klappmechanismus, welche beim verschwenken der Kopfstütze eine Relativbewegung zum Prallkörper ausführen sind in einem darin vorhandenen Hohlraum 51 angeordnet.

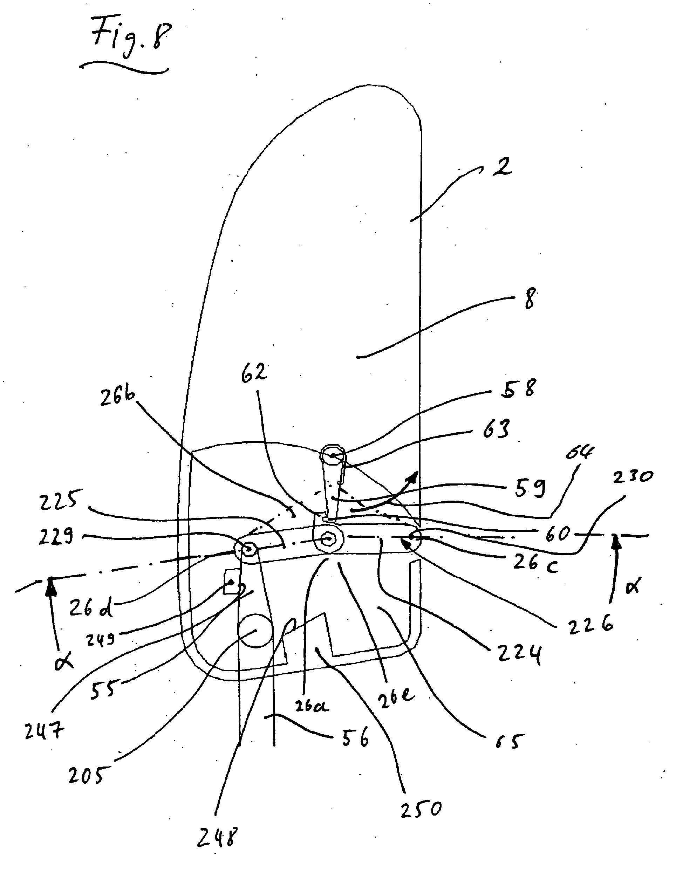

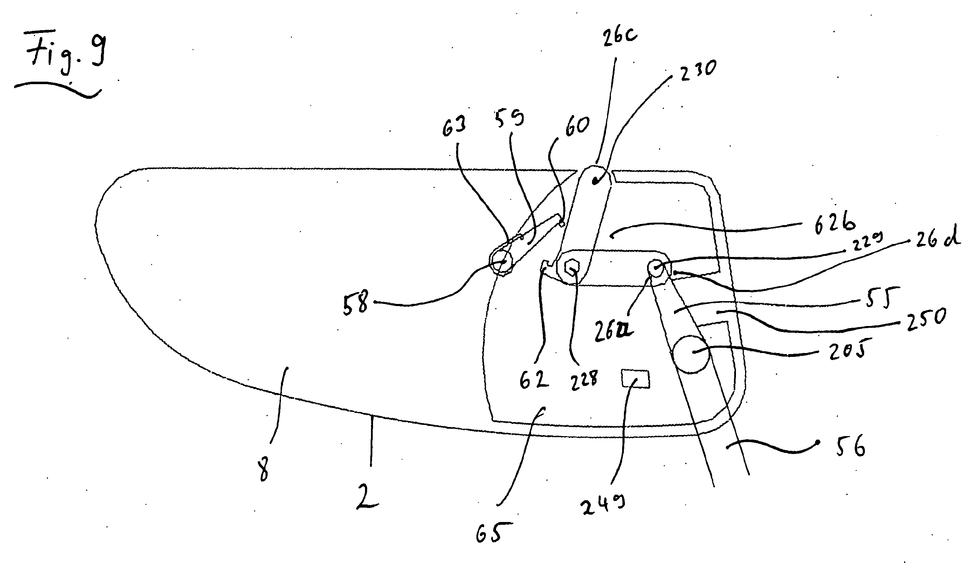

In Fig.8, 9 ist ein Ausführungsbeispiel gezeigt, bei dem die Kopfstütze 2 in ihrer Gebrauchsstellung durch einen unterstreckten Kniehebel 226 fixiert ist. Bei einem solchen Kniehebel schließen die Hebearme 224, 225 auf der dem Schwenkbereich 26b abgewandten Seite 26e einen Winkel α ein, der kleiner als 180° ist. Das zweite Ende 26d des Kniehebels 226 ist, wie bei dem Ausführungsbeispiel von Fig.6, 7, mit dem Freiende eines drehfixiert an der Schwenkachse 205 fixierten Auslegers 55 über eine Achse 229 gelenkig verbunden. Das erste Ende 26c des Hebels 224 ist an einer ortsfest im Prallkörper 8 bzw. in der Kopfstütze 2 fixierten Achse 230 angelenkt. Der Prallkörper 8 ist durch eine die Schwenkachse 205 umgreifende Schenkelfeder in die Nichtgebrauchsstellung vorgespannt. Durch die Federbelastung oder durch eine Belastung mit Trägheitskräften im Crash-Fall wird der Kniehebel 226 von seinen Enden 26c und 26d her beaufschlagt. Dieser Belastung hält der Kniehebel 226 stand, da seine Lage durch ein Gegenlager fixiert ist. Das Gegenlager ist von einer Klinke 59 gebildet, die um eine außerhalb des Schwenkbereiches 26b gelagerte Achse 58 schwenkbar ist. Das Freiende der Klinke 59 trägt einen Haken 60, der in einen Haken 62 eingreift, welcher im Bereich des Kniegelenks 26a am Hebelarm 224 angeordnet ist. In diese Stellung ist die Klinke 59 durch eine Schenkelfeder 63 vorgespannt. Dadurch ist gewährleistet, dass auch bei starker Belastung der Enden 26c, 26d der Kniehebel 226 seine in Fig.8 gezeigte unterstreckte Lage beibehält. Zur Entriegelung der Kopfstütze 2 wird die Klinke 59 in Richtung des Pfeils 64 aus dem Schwenkbereich 26b heraus geschwenkt. Der Drehmomentschluss zwischen Prallkörper 8 und Schwenkachse 105 ist nun aufgehoben, die Kopfstütze 2 kann in ihre Nichtgebrauchsstellung umklappen. In dieser Stellung liegt die Klinke 59 mit ihrem Haken 60 seitlich am Hebelarm 224 an. Beim Zurückschwenken der Kopfstütze 2 in die Gebrauchsstellung wird die Klinke 59 aufgrund der Beaufschlagung durch die Schenkelfeder 63 gegen die Pfeilrichtung 64 bewegt, wobei in der Endlage der Haken 60 selbsttätig in den Haken 63 des Hebelarms 224 eingreift. Die Teile des Klappmechanismus, welche beim verschwenken der Kopfstütze eine Relativbewegung zum Prallkörper ausführen sind in einem darin vorhandenen Hohlraum 65 angeordnet. In den Endlagen der Gebrauchs- bzw. Nichtgebrauchsstellung des Prallkörpers 8 sind im Hohlraum 65 Elastomerkörper 249, 250 mit Anschlagflächen 247 und 248 vorhanden. Die Anschlagflächen 247, 248 wirken mit den Seitenkanten des Auslegers 55 zusammen.

### Bezugszeichenliste

- 1: Sitzlehne
- 2: Kopfstütze
- 3: Fahrzeugquerrichtung
- 4: Vertiefung
- 5: Schwenkachse
- 5a: Stab
- 5b: Hülse
- 6: Ende
- 7: Ende
- 8: Prallkörper
- 8a: Teilkörper
- 8b: Teilkörper
- 9: Schraubenfeder
- 10: Federende
- 12: Federende
- 14: Flanschsegment
- 15: Einschnitt
- 16: Pfeil
- 17: Rastnase
- 18: Fahrtrichtung
- 19: Achse
- 20: Klinkenhebel
- 22: Ausnehmung
- 23: Seitenkante
- 24: Hebelarm
- 25: hebelarm
- 26: Kniehebel
- 26a: Kniegelenk
- 26b: Schwenkbereich
- 26c: erstes Ende
- 26d: zweites Ende
- 26e: Seite
- 27: Schenkel
- 28: Achse
- 29: Achse
- 30: Achse
- 31: Hohlraum
- 32: Schenkelfeder
- 33: Schenkel
- 34: Schenkel
- 35: Ausnehmung
- 36: Stange
- 37: Schrägfläche
- 38: Schrägfläche
- 39: Pfeil
- 40: Pfeil
- 42: Schraubenfeder
- 43: Betätigungskopf
- 44: Stab
- 45: Anschlag
- 46: Hohlraum
- 47: Anschlagfläche
- 48: Anschlagfläche
- 49: Elastomerkörper
- 50: Elastomerkörper
- 51: Hohlraum
- 52: Flansch
- 53: Anschlagfläche
- 54: Anschlagfläche
- 55: Ausleger
- 56: Tragstange
- 57: Stelle
- 58: Achse
- 59: Klinke
- 60: Haken
- 62: Haken
- 63: Schenkelfeder
- 64: Pfeil
- 65: Hohlraum
- 105: Schwenkachse
- 124: Hebelarm
- 125: Hebelarm
- 126: Kniehebel
- 127: Schenkel
- 128: Achse
- 129: Achse
- 130: Achse
- 136: Stange
- 137: Schrägfläche
- 138: Schrägfläche
- 147: Anschlagfläche
- 148: Anschlagfläche
- 149: Elastomerkörper
- 150: Elastomerkörper
- 205: Schwenkachse
- 224: Hebelarm
- 225: Hebelarm
- 226: Kniehebel
- 227: Schenkel
- 228: Achse
- 229: Achse
- 230: Achse
- 236: Stange
- 237: Schrägfläche
- 238: Schrägfläche
- 247: Anschlagfläche
- 248: Anschlagfläche
- 249: Elastomerkörper
- 250: Elastomerkörper

- α: Winkel
- β: Winkel

## Patentansprüche

1. Fahrzeugsitz mit einer an einer Sitzlehne angebrachten, um eine in Sitzquerrichtung verlaufende Schwenkachse (5) von einer Nichtgebrauchsstellung gegen die Wirkung einer Feder in eine Gebrauchsstellung schwenkbare und in dieser Stellung verriegelbare, im Wesentlichen von einem Prallkörper gebildete Kopfstütze, mit folgenden weiteren Merkmalen:
- die Schwenkachse (5) oder zumindest ein Längsabschnitt davon ist in Bezug auf die Sitzlehne (1) drehfixiert,
- im Prallkörper (8) ist ein Kniehebel (26, 126, 226) angeordnet, der von zwei über ein Kniegelenk (26a) miteinander verbundenen, in einer quer zur Schwenkachse (5) verlaufenden Ebene schwenkbaren Hebelarmen (24, 124, 224, 25, 125, 225)gebildet ist,
- das radial von der Schwenkachse (5) entfernte erste Ende (26c) des Kniehebels ist an einer ortsfest mit dem Prallkörper (8) verbundenen Achse drehbar gelagert,
- zur Verriegelung der Gebrauchsstellung der Kopfstütze (2) hält der Kniehebel in der Gebrauchsstellung der Kopfstütze einen Drehmomentschluss zwischen Prallkörper (8) und Schwenkachse (5) aufrecht, wobei die Lage der Hebelarme zueinander von einem im Prallkörper angeordneten Fixierelement fixiert ist.

2. Fahrzeugsitz nach Anspruch 1,
**dadurch gekennzeichnet,**
**dass** der Kniehebel (26, 126,) eine überstreckte Lage einnimmt, bei welcher die Hebelarme (24, 124, 25, 125,) auf ihrer von ihrem Schwenkbereich (26b) weg weisenden Seite (26e) einen Winkel (α) > 180° einschließen,
und **dass** ein Auslöseelement vorhanden ist, mit welcher die Winkelstellung der Hebelarme auf einen Winkel (α) < 180° veränderbar ist.

3. Fahrzeugsitz nach Anspruch 2,
**dadurch gekennzeichnet,**
**dass** das Fixierelement ein Gegenlager ist, welches auf der dem Schwenkbereich abgewandten Seite des Kniehebels (26, 126) angeordnet ist, wobei das Gegenlager beweglich gelagert ist und als Auslöseelement dient.

4. Fahrzeugsitz nach Anspruch 3,
**dadurch gekennzeichnet,**
**dass** das Gegenlager eine in Fahrzeugquerrichtung (3) im Prallkörper (8) beweglich geführte, eine Schrägfläche (37, 137) aufweisende Stange (36, 136) umfasst, wobei sie mit der Schrägfläche (37, 137) mit einer an einem Hebelarm (24, 124) angeordneten komplementär gestalteten Schrägfläche (38, 138) nach Art eines Keilgetriebes zusammenwirkt.

5. Fahrzeugsitz nach einem der Ansprüche 2 bis 4,
**dadurch gekennzeichnet,**
**dass** das zweite Ende (26d) des Kniehebels (26) mit einem Klinkenhebel (20) gelenkig verbunden ist, welcher um eine in Fahrzeugquerrichtung (3) verlaufende, ortsfest mit dem Prallkörper (8) verbundenen Achse (19) zwischen einer Sperr- und einer Freigabestellung schwenkbar gelagert ist, wobei in der Sperrstellung ein Drehmomentschluss zwischen Klinkenhebel und Schwenkachse (5) vorhanden und in der Freigabestellung aufgehoben ist.

6. Fahrzeugsitz nach Anspruch 5,
**dadurch gekennzeichnet,**
**dass** in der der Schwenkachse (5) zugewandten Seite des Klinkenhebels (20) eine Ausnehmung (22) vorhanden ist, in die in der Sperrstellung eine von der Umfangsfläche der Schwenkachse (5) vorstehende Rastnase (17) eingreift.

7. Fahrzeugsitz nach einem der Ansprüche 2 bis 4,
**dadurch gekennzeichnet,**
**dass** sich das zweite Ende (26d) des Kniehebels (126) an einem von der Schwenkachse (5) abstehenden und mit dieser drehfest verbundenen Ausleger (55) abstützt.

8. Fahrzeugsitz nach Anspruch 1,
**dadurch gekennzeichnet,**
**dass** der Kniehebel (226) eine unterstreckte Lage einnimmt, bei welcher die Hebelarme (224, 225) auf ihrer von ihrem Schwenkbereich (26b) weg weisenden Seite (26e) einen Winkel (α) < 180° einschließen.

9. Fahrzeugsitz nach Anspruch 8,
**dadurch gekennzeichnet,**
**dass** das Fixierelement ein im Schwenkbereich (26b) angeordnetes Gegenlager umfasst, das mit einem Hebelarm (224) im Bereich des Kniegelenks (26a) zusammenwirkt, wobei es zur Entriegelung der Gebrauchsstellung der Kopfstütze (2) aus der Bewegungsbahn des Hebelarms (224) entfernbar ist.

10. Fahrzeugsitz nach Anspruch 9,
**dadurch gekennzeichnet,**
**dass** das Gegenlager eine im Schwenkbereich (26b) des Kniehebels (226) angeordnete, mit ihrem einen Ende an einer Achse (58) zwischen einer Sperr- und einer Freigabestellung schwenkbar gelagerte Klinke (59) ist, die in der Sperrstellung mit einem an ihrem Freiende angeordneten Haken (60) in einen an einem Hebelarm (224) im Bereich des Kniegelenks () vorhandenen Haken (62) eingreift und die sich in der Freigabestellung in einer Schwenkstellung befindet, in der sie den Haken (62) des Hebelarms (224) freigibt und außerhalb des Schwenkbereichs (26b) angeordnet ist.

11. Fahrzeugsitz nach einem der vorhergehenden Ansprüche,
**dadurch gekennzeichnet,**
**dass** der Kniehebel (26, 126, 226) mit Hilfe einer Feder in Richtung seiner den Drehmomentschluss zwischen Prallkörper (8) und Schwenkachse (5) aufrecht erhaltenden Lage vorgespannt ist.

12. Fahrzeugsitz nach einem der Ansprüche 1 bis 11,
**dadurch gekennzeichnet,**
**dass** die Schwenkachse (5) zwei, jeweils seitlich aus dem Prallkörper (8) mit einem Überstand herausstehende, zueinander axial bewegliche Teile umfasst, wobei ein Teil gegen die Wirkung einer Feder soweit relativ zum Prallkörper verschiebbar ist, dass sein Überstand zumindest verringert ist.

13. Fahrzeugsitz nach Anspruch 12,
**dadurch gekennzeichnet,**
**dass** die Feder eine Schraubenfeder (9) ist, welche das andere Teil axial fixiert umgreift.

14. Fahrzeugsitz nach Anspruch 13,
**dadurch gekennzeichnet,**
**dass** die Schraubenfeder (9) die Kopfstütze (2) in ihrer Nichtgebrauchsstellung hält.

## Claims

1. Vehicle seat with a headrest, substantially formed from an impact element, attached to a seat backrest and which may be pivoted against the effect of a spring about a pivot pin (5), extending in the transverse direction of the seat, from a position of rest into a position of use, and which may be locked in this position, with the following further features:
- the pivot pin (5) or at least a longitudinal portion thereof is rotatably fixed relative to the seat backrest (1),
- a toggle lever (26, 126, 226) is arranged in the impact element (8) and is formed by two lever arms (24, 124, 224, 25, 125, 225) which are connected to one another via a toggle link (26a) and which may be pivoted in a plane extending transversely to the pivot pin (5),
- the first end (26c) of the toggle lever radially remote from the pivot pin (5) is rotatably mounted on a pin fixedly connected to the impact element (8),
- for locking the position of use of the headrest (2) the toggle lever maintains a torque connection between the impact element (8) and the pivot pin (5) in the position of use of the headrest, the position of the lever arms to one another being fixed by a fixing element arranged in the impact element.

2. Vehicle seat according to Claim 1, **characterized in that** the toggle lever (26, 126) adopts an overextended position, in which the lever arms (24, 124, 25, 125) on their face (26e) facing away from their pivoting region (26b) enclose an angle (α) > 180° and **in that** a release element is present with which the angular position of the lever arms may be altered to an angle (α) < 180°.

3. Vehicle seat according to Claim 2, **characterized in that** the fixing element is a counter bearing which is arranged on the face of the toggle lever (26, 126) facing away from the pivoting region, the counter bearing being movably mounted and serving as a release element.

4. Vehicle seat according to Claim 3, **characterized in that** the counter bearing comprises a bar (36, 136) movably guided in the impact element (8), in the transverse direction of the vehicle (3), and comprising an oblique surface (37, 137), said bar cooperating, with the oblique surface (37, 137), with an oblique surface (38, 138) of complementary design arranged on a lever arm (24, 124) in the manner of a wedge mechanism.

5. Vehicle seat according to one of Claims 2 to 4, **characterized in that** the second end (26d) of the toggle lever (26) is connected in an articulated manner to a latching lever (20) which is pivotably mounted between a locked position and a released position about a pin (19) extending in the transverse direction of the vehicle (3) and connected fixedly to the impact element (8), a torque connection being present in the locked position between the latching lever and the pivot pin (5) and being cancelled in the released position.

6. Vehicle seat according to Claim 5, **characterized in that** a recess (22) is present in the face of the latching lever (20) facing the pivot pin (5), and into which in the locked position a latching lug (17) projecting from the peripheral surface of the pivot pin (5) engages.

7. Vehicle seat according to one of Claims 2 to 4, **characterized in that** the second end (26d) of the toggle lever (126) is supported on a radial arm (55) projecting from the pivot pin (5) and connected fixedly in rotation therewith.

8. Vehicle seat according to Claim 1, **characterized in that** the toggle lever (226) adopts an underextended position in which the lever arms (224, 225) enclose an angle (α) < 180° on their face (26e) facing away from their pivoting region (26b).

9. Vehicle seat according to Claim 8, **characterized in that** the fixing element comprises a counter bearing which is arranged in the pivoting region (26b) and which cooperates with a lever arm (224) in the region of the toggle link (26a), said fixing element being able to be removed from the displacement path of the lever arm (224) for unlocking the position of use of the headrest (2).

10. Vehicle seat according to Claim 9, **characterized in that** the counter bearing is a latch (59) arranged in the pivoting region (26b) of the toggle lever (226) and pivotably mounted between a locked position and a released position with its one end on a pin (58) and which in the locked position engages with a hook (60) arranged on its free end in a hook (62) present on a lever arm (224) in the region of the toggle link (26a) and which, in the released position, is located in a pivoting position in which said latch releases the hook (62) of the lever arm (224) and is arranged outside the pivoting region (26b).

11. Vehicle seat according to one of the preceding claims, **characterized in that** the toggle lever (26, 126, 226) is pretensioned by means of a spring in the direction of its position maintaining the torque connection between the impact element (8) and the pivot pin (5).

12. Vehicle seat according to one of Claims 1 to 11, **characterized in that** the pivot pin (5) comprises two parts, respectively projecting laterally from the impact element (8) with a projection, and which may be axially moved towards one another, one part being displaceable relative to the impact element against the effect of a spring, to such an extent that its projection is at least reduced.

13. Vehicle seat according to Claim 12, **characterized in that** the spring is a helical spring (9) which encompasses the other part in an axially fixed manner.

14. Vehicle seat according to Claim 13, **characterized in that** the helical spring (9) holds the headrest (2) in its position of rest.

## Revendications

1. Siège de véhicule comportant un appui-tête formé essentiellement d'un coussin, monté sur un dossier de siège, qui peut basculer par rapport à un axe (5) de basculement s'étendant dans une direction transversale de siège d'une position de non-utilisation à l'encontre de l'action d'un ressort à une position d'utilisation dans laquelle il peut être verrouillé, comportant les caractéristiques supplémentaires suivantes:
- l'axe (5) de basculement ou au moins un tronçon longitudinal de celui-ci est solidaire en rotation du dossier (1) de siège,
- dans le coussin (8) est disposé un levier à genouillère (26, 126, 226), qui est formé de deux bras (24, 124, 224, 25, 125, 225) de levier qui peuvent basculer dans un plan s'étendant transversalement à l'axe (5) de basculement et qui sont reliés mutuellement par une genouillère (26a),
- la première extrémité (26c) du levier à genouillère la plus éloignée radialement de l'axe (5) de basculement est montée rotative sur un axe qui est relié de manière fixe en position au coussin (8),
- pour le verrouillage de la position d'utilisation de l'appui-tête (2), le levier à genouillères maintient, dans la position d'utilisation de l'appui-tête (2), une liaison en couple de rotation entre le coussin (8) et l'axe (5) de basculement, les positions des bras de levier étant immobilisés l'un par rapport à l'autre par un élément de immobilisation disposé dans le coussin.

2. Siège de véhicule suivant la revendication 1,
**caractérisé en ce que**
le levier (26, 126) à genouillère prend une position excessivement allongée, dans laquelle les bras (24, 124, 25, 125) de levier font par leur côté (26e) éloigné de leur zone (26b) de basculement un angle (α) > 180°,
et **en ce que** un élément de déclenchement, par lequel la position angulaire des bras de leviers peut être modifiée jusqu'à un angle (α) < 180°.

3. Siège de véhicule suivant la revendication 2,
**caractérisé en ce que**
l'élément d'immobilisation est une butée, qui est disposée du côté du levier (26, 126) à genouillère, qui est à l'opposé de la région de basculement, la butée étant montée mobile et servant d'élément de déclenchement.

4. Siège de véhicule suivant la revendication 3,
**caractérisé en ce que**
la butée comporte une barrette (36, 136) comportant une surface (37, 137) inclinée qui est guidée mobile dans le coussin (8) en ferme et élastique dans la direction (3) transversale du véhicule, cette barrette coopérant par sa surface (37, 137) inclinée avec une surface (38, 138) inclinée formée de manière complémentaire et disposée dans un bras (24, 124) de levier à la manière d'un engrenage à cannelures.

5. Siège de véhicule suivant l'un des revendications 2 à 4
**caractérisé en ce que**
la deuxième extrémité (26d) du levier (26) à genouillères est relié de manière articulée à un levier (20) à cliquet, qui est monté basculant entre une position de blocage et une position de libération par rapport à un axe (19) relié fixe en position avec le coussin (8) et s'étendant dans la direction transversale du véhicule, une liaison en couple de rotation étant, dans la position de blocage, prévue entre le levier à cliquet et l'axe (5) de basculement et le verrou de couple de rotation et étant libérée dans la position de libération.

6. Siège de véhicule suivant la revendication 5,
**caractérisé en ce que**
du côté tourné vers l'axe (5) de basculement du levier (20) à cliquet, il est prévu un évidemment (22) dans lequel pénètre, dans la position de blocage, un bec (17) d'encliquettage faisant saillie de la surface périphérique de l'axe (5) de basculement.

7. Siège de véhicule suivant l'une des revendications 2 à 4,
**caractérisé en ce que**
la deuxième extrémité (26d) du levier (126) à genouillère s'appuie contre un bras (55) faisant saillie de l'axe (5) de basculement et étant solidaire en rotation.

8. Siège de véhicule suivant la revendication 1, **caractérisé en ce que**,
le levier (226) à genouillère prend une position sous allongée, dans laquelle les bras (224, 225) de levier par leur côté (26e) tourné à l'opposé de leur région (26b) de basculement font un angle (α) < 180°.

9. Siège de véhicule suivant la revendication 8,
**caractérisé en ce que**
l'élément de d'immobilisation comporte une butée disposée dans la région (26b) de basculement, qui coopère avec un bras (224) de levier dans la région de la genouillère (26a), en pouvant, pour verrouiller la position d'utilisation de l'appui-tête (2), être éloigné du trajet de déplacement du bras (224) de levier.

10. Siège de véhicule suivant la revendication 9, **caractérisé en ce que**
la butée est un cliquet (59) disposé dans la région (26b) de basculement du levier (226) à genouillère, qui peut basculer par rapport à un axe (58)entre une position de blocage et une position de libération par une de ses extrémités, le cliquet dans la position de blocage pénétrant par un crochet (60) disposé à l'une de ses extrémités libres dans un crochet (62) disposé sur un bras (224) de levier dans la région de la genouillère et le cliquet se trouvant dans la position de libération dans une position de basculement, dans laquelle il libère le crochet (62) du bras (224) de levier et est disposé à l'extérieur de la région (26b) de basculement.

11. Siège de véhicule suivant l'une des revendications précédentes,
**caractérisé en ce que**
le levier (26, 126, 226) à genouillère est, à l'aide d'un ressort, mis sous tension préalable dans la direction de sa position qui maintient la liaison en couple de rotation entre le coussin (8) et l'axe de basculement droit.

12. Siège de véhicule suivant l'une des revendications 1 à 11, **caractérisé en ce que**
l'axe (5) de basculement comporte deux parties mobiles axialement l'une par rapport à l'autre et faisant saillie chacune latéralement du coussin (8), une partie pouvant coulisser à l'encontre de l'action d'un ressort par rapport au coussin suffisamment pour que la distance de sa saillie soit au moins diminuée.

13. Siège de véhicule suivant la revendication 12,
**caractérisé en ce que**
le ressort est un ressort (9) hélicoïdal, qui entoure l'autre partie en l'immobilisant axialement.

14. Siège de véhicule suivant la revendication 13,
**caractérisé en ce que**
le ressort (9) hélicoïdal maintient l'appui-tête (2) dans sa position de non-utilisation.
